# EUROPEAN PATENT APPLICATION

(11) **EP 3 379 744 A1**
(43) Date of publication of application: **26.09.2018**
(21) Application number: 16865546.2
(22) Date of filing: 18.07.2016
(51) Int. Cl.: H04B 10/272, H04J 14/02

(54) **OPTICAL NETWORK ALLOCATION METHOD AND OPTICAL DISTRIBUTION NETWORK**

(30) Priority: 19.11.2015 CN 201510807709
(71) Applicant: ZTE Corporation, Shenzhen, Guangdong 518057 (CN)
(72) Inventor: YANG, Bo, Shenzhen Guangdong 518057 (CN); XU, Jidong, Shenzhen Guangdong 518057 (CN); HUANG, Xingang, Shenzhen Guangdong 518057 (CN)
(74) Representative: Aipex B.V.
(86) International application number: PCT/CN2016/090315
(87) International publication number: WO 2017/084368

(57) **Abstract**

An optical network distribution method and an optical distribution network are disclosed. The optical distribution network employs a periodic wavelength division multiplexing module. By periodically distributing uplink and downlink wavelength division multiplexing, WDM optical signals, all the second-stage wavelength division multiplexing modules are the same, and the second-stage wavelength division multiplexing modules may be interchanged. The problem that no interchangeability exists among second-stage wavelength splitters due to different wavelengths distributed by the second-stage wavelength splitters is solved, the uniformity of the second-stage wavelength splitters is realized, the scale production cost of the splitters is lowered, and the maintenance cost of the splitters is reduced.

## Description

### Technical Field

Embodiments of the present invention relate to, but are not limited to, an optical communication technology, and particularly relate to an optical network distribution method and an optical distribution network.

### Background

In recent years, with continuously increased network bandwidth demands, a low-cost and high-bandwidth optical access technology such as a passive optical network (PON) technology has gradually become a mainstream technology for broadband access.

A traditional PON system such as an Ethernet passive optical network, EPON or a Gigabit-capable passive optical network, GPON realizes data transmission between an optical line terminal (OLT) and an optical network unit (ONU) in a time division multiplexing (TDM) way. Single-wavelength optical signals are transmitted in uplink and in downlink at a single PON port of a time division multiplexing passive optical network (TDM-PON) system, and an optical distribution network (ODN) between the OLT and the ONU realizes power distribution of the optical signal by adopting a splitter. For the ODN based on the splitter, with increasement of a splitting ratio, an optical link loss is continuously increased, and meanwhile, a bandwidth that can be allocated to a single ONU is continuously reduced. For a wavelength-routed ODN based on a wavelength division multiplexing device, the optical link loss is not greatly changed with the increasement of the splitting ratio, and an ONU user exclusively uses a single-wavelength bandwidth resource, so that the wavelength-routed ODN based on the wavelength multiplexing device has its unique advantages in application scenarios with high bandwidth, large splitting ratio, long distance and the like. A wavelength division multiplexing passive optical network (WDM-PON) based on the wavelength-routed ODN will become an evolution tendency of the next-generation PON. In addition to the WDM-PON, the wavelength-routed ODN based on the wavelength division multiplexing device can also be applied to some hybrid networks such as a TDM-PON and WDM-PON coexisting network.

Different from the above splitter-type ODN, a wavelength relationship between each branch port of the wavelength-routed ODN and the ONU is in one-to-one correspondence. Therefore, no interchangeability exists among splitters due to different wavelengths distributed by all second-stage wavelength splitters in a two-stage splitting wavelength-routed ODN. Thus, the large-scale production of the second-stage wavelength splitters is affected, and the difficulty of construction and assembly as well as the storage cost are increased.

No effective solutions are provided at present for solving the problem in the related art that no interchangeability exists among the devices due to different wavelengths distributed by the second-stage wavelength splitters in the two-stage splitting wavelength-routed ODN.

### Summary

The following is an overview of a subject matter detailed in the present invention. This summary is not intended to limit a protective scope of the claims.

An embodiment of the present invention provides an optical network distribution method and an optical distribution network to at least solve the problem in the related art that no interchangeability exists among devices due to different wavelengths distributed by second-stage wavelength splitters in a two-stage splitter and wavelength routing-type ODN.

According to an aspect of the embodiment of the present invention, there is provided an optical distribution network, including a first-stage wavelength division multiplexing module and a plurality of second-stage wavelength division multiplexing modules; where
the second-stage wavelength division multiplexing modules are configured to receive a downlink optical signal from the first-stage wavelength division multiplexing module; and the first-stage wavelength division multiplexing module is configured to receive uplink optical signals from the plurality of second-stage wavelength division multiplexing modules, and
in a case that the first-stage wavelength division multiplexing module employs a periodic wavelength division multiplexing module and the plurality of second-stage wavelength division multiplexing modules employ non-periodic wavelength division multiplexing modules, or in a case that the first-stage wavelength division multiplexing module employs a non-periodic wavelength division multiplexing module and the plurality of second-stage wavelength division multiplexing modules employ periodic wavelength division multiplexing modules, the plurality of second-stage wavelength division multiplexing modules are the same device.

Optionally, the optical distribution network further includes a trunk optical fiber, first-stage branch optical fibers, and second-stage branch optical fibers;
the first-stage wavelength division multiplexing module employs the periodic wavelength division multiplexing module and the plurality of second-stage wavelength division multiplexing modules employ the non-periodic wavelength division multiplexing modules,
the first-stage wavelength division multiplexing module is configured to: distribute MxN downlink wavelengths of the trunk optical fiber to N downlink channels, where each of the downlink channels includes M downlink wavelengths with equal intervals, where the interval of the M downlink wavelengths within each of the downlink channels is equal to one multiplexing cycle of the first-stage wavelength division multiplexing module, and an interval between downlink wavelengths of adjacent ones of the downlink channels is a channel interval of the first-stage wavelength division multiplexing module; multiplex M×N uplink wavelengths input by the first-stage branch optical fibers of the N uplink channels to an uplink output channel, where each of the uplink channels includes M uplink wavelengths with equal intervals, the interval of the M uplink wavelengths within each of the uplink channels is equal to one multiplexing cycle of the first-stage wavelength division multiplexing module, and an interval between uplink wavelengths of adjacent ones of the uplink channels is a channel interval of the first-stage wavelength division multiplexing module;
the second-stage wavelength division multiplexing modules are configured: to divide the downlink wavelengths of the first-stage branch optical fibers into M bands, where the downlink wavelengths within different bands are distributed to the corresponding second-stage branch optical fibers by the second-stage wavelength division multiplexing modules; and divide M×N uplink wavelengths into M bands, where the second-stage wavelength division multiplexing modules multiplex the uplink wavelengths within different bands from the corresponding second-stage branch optical fibers;
where N and M are positive integers greater than 1.

Optionally, the optical distribution network further includes a trunk optical fiber, first-stage branch optical fibers, and second-stage branch optical fibers;
the first-stage wavelength division multiplexing module employs the non-periodic wavelength division multiplexing module and the plurality of second-stage wavelength division multiplexing modules employ the periodic wavelength division multiplexing modules,
the first-stage wavelength division multiplexing module is configured to divide M×N downlink wavelengths of the trunk optical fiber into N bands, where the downlink wavelengths within different bands are distributed to the corresponding first-stage branch optical fibers by the first-stage wavelength division multiplexing module; and divide the uplink wavelengths into N bands, where the first-stage wavelength division multiplexing module multiplexes the uplink wavelengths within different bands from the corresponding first-stage branch optical fibers; and
the second-stage wavelength division multiplexing modules are configured to distribute the downlink wavelengths of the first-stage branch optical fibers to M downlink channels, where each of the downlink channels includes N downlink wavelengths with equal intervals, where the interval of the N downlink wavelengths within each of the downlink channels is equal to one multiplexing cycle of the second-stage wavelength division multiplexing modules, and an interval between downlink wavelengths of adjacent ones of the downlink channels is a channel interval of the second-stage wavelength division multiplexing modules; multiplex M×N uplink wavelengths input by the second-stage branch optical fibers of M uplink channels to an uplink output channel, where each of the uplink channels includes N uplink wavelengths with equal intervals, the interval of the N uplink wavelengths within each of the uplink channels is equal to one multiplexing cycle of the second-stage wavelength division multiplexing modules, and an interval between uplink wavelengths of adjacent ones of the uplink channels is a channel interval of the second-stage wavelength division multiplexing modules.N and M are positive integers greater than 1

Optionally, the first-stage wavelength division multiplexing module includes an arrayed waveguide grating device, an etched diffraction grating, a thin film filter device, or a fiber grating device; and
the second wavelength division multiplexing modules include arrayed waveguide grating devices, etched diffraction gratings, thin film filter devices, or fiber grating devices.

Optionally, a device of the periodic wavelength division multiplexing module includes a periodic arrayed waveguide grating device or a periodic etched diffraction grating device.

According to another aspect of the embodiment of the present invention, there is further provided an optical network distribution method, including: receiving downlink optical signals from a first-stage wavelength division multiplexing module of an optical distribution network by a plurality of second-stage wavelength division multiplexing modules of the optical distribution network; and receiving uplink optical signals from the plurality of second-stage wavelength division multiplexing modules by the first-stage wavelength division multiplexing module, where
in a case that the first-stage wavelength division multiplexing module employs a periodic wavelength division multiplexing module and the plurality of second-stage wavelength division multiplexing modules employ non-periodic wavelength division multiplexing modules, or in a case that the first-stage wavelength division multiplexing module employs a non-periodic wavelength division multiplexing module and the plurality of second-stage wavelength division multiplexing modules employ periodic wavelength division multiplexing modules, the plurality of second-stage wavelength division multiplexing modules are the same device.

Optionally, the first-stage wavelength division multiplexing module employs the periodic wavelength division multiplexing module and the plurality of second-stage wavelength division multiplexing modules employ non-periodic wavelength division multiplexing modules;
the receiving the downlink optical signals from the first-stage wavelength division multiplexing module of the optical distribution network by the plurality of second-stage wavelength division multiplexing modules of the optical distribution network; and receiving uplink optical signals from the plurality of second-stage wavelength division multiplexing modules by the first-stage wavelength division multiplexing module include:
distributing M×N downlink wavelengths of a trunk optical fiber to N downlink channels by the first-stage wavelength division multiplexing module, where each of the downlink channels includes M downlink wavelengths with equal intervals, where the interval of the M downlink wavelengths within each of the downlink channels is equal to one multiplexing cycle of the first-stage wavelength division multiplexing module, and an interval between downlink wavelengths of adjacent ones of the downlink channels is a channel interval of the first-stage wavelength division multiplexing module;
dividing downlink wavelengths of first-stage branch optical fibers into M bands by the second-stage wavelength division multiplexing modules, where the downlink wavelengths within different bands are distributed to corresponding second-stage branch optical fibers by the second-stage wavelength division multiplexing modules;
dividing M×N uplink wavelengths into M bands by the second-stage wavelength division multiplexing modules, where the second-stage wavelength division multiplexing modules multiplex the uplink wavelengths within different bands from the corresponding second-stage branch optical fibers; and
multiplexing the M×N uplink wavelengths input by the first-stage branch optical fibers of N uplink channels to an uplink output channel by the first-stage wavelength division multiplexing module, where each of the uplink channels includes M uplink wavelengths with equal intervals, the interval of the M uplink wavelengths within each of the uplink channels is equal to one multiplexing cycle of the first-stage wavelength division multiplexing module, and an interval between uplink wavelengths of adjacent ones of the uplink channels is a channel interval of the first-stage wavelength division multiplexing module; where N and M are positive integers greater than 1.

Optionally, the first-stage wavelength division multiplexing module employs the non-periodic wavelength division multiplexing module and the plurality of second-stage wavelength division multiplexing modules employ the periodic wavelength division multiplexing modules,
the receiving the downlink optical signal from the first-stage wavelength division multiplexing module of the optical distribution network by the plurality of second-stage wavelength division multiplexing modules of the optical distribution network; and receiving the uplink optical signals from the plurality of second-stage wavelength division multiplexing modules by the first-stage wavelength division multiplexing module include:
dividing M×N downlink wavelengths of a trunk optical fiber into N bands by the first-stage wavelength division multiplexing module, where the downlink wavelengths within the different bands are distributed to corresponding first-stage branch optical fibers by the first-stage wavelength division multiplexing module;
distributing the downlink wavelengths of the first-stage branch optical fiber to M downlink channels by the second-stage wavelength division multiplexing modules, where each of the downlink channels includes N downlink wavelengths with equal intervals, where the interval of the N downlink wavelengths within each of the downlink channels is equal to one multiplexing cycle of the second-stage wavelength division multiplexing modules, and an interval between downlink wavelengths of adjacent ones of the downlink channels is a channel interval of the second-stage wavelength division multiplexing modules;
multiplexing M×N uplink wavelengths input by the second-stage branch optical fibers of M uplink channels to an uplink output channel by the second-stage wavelength division multiplexing modules, where each of the uplink channels includes N uplink wavelengths with equal intervals, the interval of the N uplink wavelengths within each of the uplink channels is equal to one multiplexing cycle of the second-stage wavelength division multiplexing modules, and an interval between uplink wavelengths of adjacent ones of the uplink channels is a channel interval of the second-stage wavelength division multiplexing modules;
dividing the uplink wavelengths into N bands by the first-stage wavelength division multiplexing module, where the first-stage wavelength division multiplexing module multiplexes the uplink wavelengths within different bands from the corresponding first-stage branch optical fibers, where N and M are positive intergers greater than 1.

Optionally, the first-stage wavelength division multiplexing module includes an arrayed waveguide grating device, an etched diffraction grating, a thin film filter device, or a fiber grating device; and
the second wavelength division multiplexing modules include arrayed waveguide grating devices, etched diffraction gratings, thin film filter devices, or fiber grating devices.

Optionally, a device of the periodic wavelength division multiplexing module includes a periodic arrayed waveguide grating device or a periodic etched diffraction grating device.

Optionally, before distributing the M×N downlink wavelengths of the trunk optical fiber to the N downlink channels by the first-stage wavelength division multiplexing module, the method further includes:
distributing optical signals of downlink non-wavelength division multiplexed wavelengths and optical signals of downlink wavelength division multiplexed wavelengths respectively to a splitter-type optical distribution network (ODN) and a wavelength-routed optical distribution network (ODN) through a wavelength division multiplexing (WDM) device.

Optionally, before transmitting the uplink wavelengths within the different bands from the first-stage branch optical fibers to the trunk optical fiber of the optical distribution network by the first-stage wavelength division multiplexing module, the method further includes:
multiplexing optical signals of uplink non-wavelength division multiplexed wavelengths and optical signals of uplink wavelength division multiplexed wavelengths by a wavelength division multiplexing (WDM) device.

Optionally, before distributing the multiple downlink wavelengths of the first-stage branch optical fibers to the downlink channels by the second-stage wavelength division multiplexing modules, the method further includes:
distributing optical signals of downlink non-wavelength division multiplexed wavelengths and optical signals of downlink wavelength division multiplexed wavelengths respectively to a splitter-type optical distribution network (ODN) and a wavelength-routed optical distribution network (ODN) through a wavelength division multiplexing (WDM) device.

Optionally, before multiplexing uplink wavelengths within the different bands from the second-stage branch optical fibers to the first-stage branch fibers of the optical distribution network by the second-stage wavelength division multiplexing modules, the method further includes:
multiplexing optical signals of uplink non-wavelength division multiplexed wavelengths and optical signals of uplink wavelength division multiplexed wavelengths by a wavelength division multiplexing (WDM) device.

According to yet another aspect, an embodiment of the present invention further provides a computer-readable storage medium in which computer-executable instructions are stored, the computer-executable instructions are used to perform the optical network distribution method according to any of the above items.

By means of the embodiments of the present invention, a plurality of second-stage wavelength division multiplexing modules of an optical distribution network receive a downlink optical signal from a first-stage wavelength division multiplexing module of the optical distribution network; and the first-stage wavelength division multiplexing module receives uplink optical signals from the plurality of second-stage wavelength division multiplexing modules, and when the first-stage wavelength division multiplexing module employs a periodic wavelength division multiplexing module and the plurality of second-stage wavelength division multiplexing modules employ non-periodic wavelength division multiplexing modules, or when the first-stage wavelength division multiplexing module employs a non-periodic wavelength division multiplexing module and the plurality of second-stage wavelength division multiplexing modules employ periodic wavelength division multiplexing modules, the plurality of second-stage wavelength division multiplexing modules are the same device. Accordingly, the problem that no interchangeability exists among second-stage wavelength splitters due to different wavelengths distributed by the second-stage wavelength splitters in a two-stage splitter and wavelength routing-type ODN is solved, the uniformity of the second-stage wavelength splitters is realized, the scale production cost of the splitters is lowered, and the maintenance cost of the splitters is reduced.

Additional features and advantages of the embodiments of the present invention will be set forth in the description which follows, and in part will be apparent from the description, or may be learned by the practice of the present invention. Objectives and other advantages of the present invention may be realized and attained by a structure particularly pointed out in the description and claims hereof as well as accompanying drawings.

Other aspects may be understood upon reading and understanding the accompanying drawings and the detailed description.

### Description of Drawings

Accompanying drawings described herein are provided to provide a further understanding of the present invention, and constitute a part of the present application. Exemplary embodiments and descriptions thereof of the present invention are used to explain the present invention, and do not constitute improper limits to the present invention. In the accompanying drawing:
FIG. 1 is a schematic structural composition diagram showing an optical distribution network according to an embodiment of the present invention;
FIG. 2a is a first flow diagram of optical network distribution according to an embodiment of the present invention;
FIG. 2b is a second flow diagram of optical network distribution according to an embodiment of the present invention;
FIG. 3a is a third flow diagram of optical network distribution according to an embodiment of the present invention;
FIG. 3b is a fourth flow diagram of optical network distribution according to an embodiment of the present invention;
FIG. 4a is a first schematic diagram showing a two-stage wavelength division multiplexing optical distribution network according to a first preferred embodiment of the present invention;
FIG. 4b is a second schematic diagram showing a two-stage wavelength division multiplexing optical distribution network according to the first preferred embodiment of the present invention;
FIG. 4c is a third schematic diagram showing a two-stage wavelength division multiplexing optical distribution network according to the first preferred embodiment of the present invention;
FIG. 5a is a first schematic diagram showing a two-stage wavelength division multiplexing optical distribution network according to a second preferred embodiment of the present invention;
FIG. 5b is a second schematic diagram showing a two-stage wavelength division multiplexing optical distribution network according to the second preferred embodiment of the present invention;
FIG. 5c is a third schematic diagram showing a two-stage wavelength division multiplexing optical distribution network according to the second preferred embodiment of the present invention;,
FIG. 6a is a first schematic diagram of an implementation process of an optical distribution method according to a third preferred embodiment of the present invention;
FIG. 6b is a second schematic diagram of an implementation process of an optical distribution method according to the third preferred embodiment of the present invention;
FIG. 7a is a first schematic diagram of an implementation process of an optical distribution method according to a fourth preferred embodiment of the present invention;
FIG. 7b is a second schematic diagram of an implementation process of an optical distribution method according to the fourth preferred embodiment of the present invention;
FIG. 8 is a schematic diagram showing a two-stage wavelength division multiplexing and time division multiplexing coexisting optical distribution network according to a fifth preferred embodiment of the present invention; and
FIG. 9 is a schematic diagram showing a two-stage branch optical fiber detection network according to a sixth preferred embodiment of the present invention.

### Detailed description of Embodiment

Hereinafter, the present invention will be described in detail with reference to accompanying drawings and in conjunction with embodiments. It should be noted that the embodiments in the present application and features in the embodiments may be combined with each other without conflict.

It should be noted that terms "first", "second", and the like in the description and claims of the present invention and the foregoing accompanying drawings are used to distinguish similar objects and not necessarily used to describe a specific sequence or precedence order.

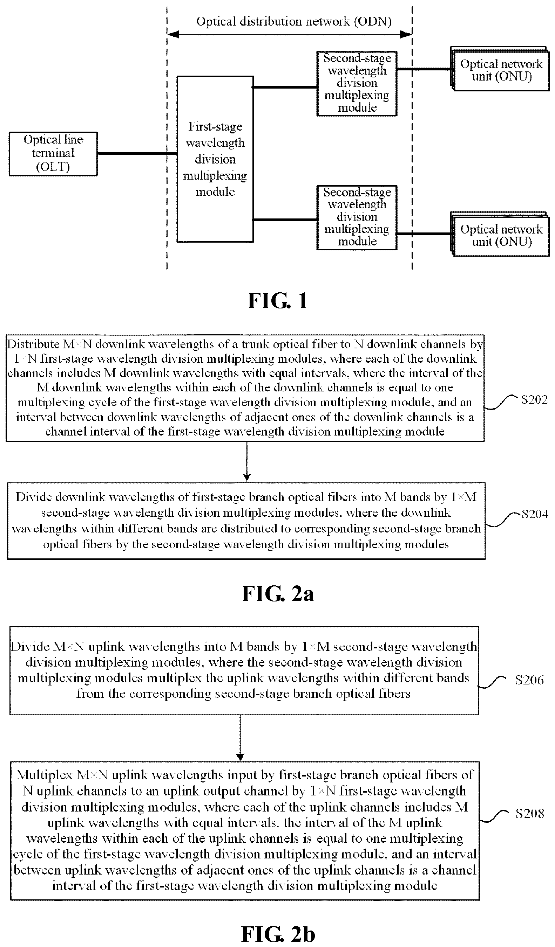

FIG. 1 is a schematic structural composition diagram showing an optical distribution network according to an embodiment of the present invention. As shown in FIG. 1, the optical distribution network includes a first-stage wavelength division multiplexing module and a plurality of second-stage wavelength division multiplexing modules; where
each second-stage wavelength division multiplexing module is configured to receive a downlink optical signal from the first-stage wavelength division multiplexing module; and the first-stage wavelength division multiplexing module is configured to receive uplink optical signals from the plurality of second-stage wavelength division multiplexing modules, and
in a case that the first-stage wavelength division multiplexing module employs a periodic wavelength division multiplexing module and the plurality of second-stage wavelength division multiplexing modules employ non-periodic wavelength division multiplexing modules, or in a case that the first-stage wavelength division multiplexing module employs a non-periodic wavelength division multiplexing module and the plurality of second-stage wavelength division multiplexing modules employ periodic wavelength division multiplexing modules, the plurality of second-stage wavelength division multiplexing modules are the same device.

By means of the above optical distribution network, the problem that no interchangeability exists among second-stage wavelength splitters due to different wavelengths distributed by the second-stage wavelength splitters in a two-stage splitting wavelength-routed ODN is solved, the uniformity of the second-stage wavelength splitters is realized, the scale production cost of the splitters is lowered, and the maintenance cost of the splitters is reduced.

As shown in FIG. 1, the optical distribution network further includes a trunk optical fiber connecting an OLT with the first-stage wavelength division multiplexing module, first-stage branch optical fibers connecting the first-stage wavelength division multiplexing module with the individual second-stage wavelength division multiplexing modules, and second-stage branch optical fibers connecting the individual second-stage wavelength division multiplexing modules with ONUs corresponding to the second-stage wavelength division multiplexing modules.

In a case where the first-stage wavelength division multiplexing module employs a periodic wavelength division multiplexing module, and the plurality of second-stage wavelength division multiplexing modules employ non-periodic wavelength division multiplexing modules, 1×N first-stage wavelength division multiplexing module distributes M×N downlink wavelengths of the trunk optical fiber to N downlink channels, where each of the downlink channels includes M downlink wavelengths with equal intervals, where an interval of the M downlink wavelengths within each of the downlink channels is equal to one multiplexing cycle of the first-stage wavelength division multiplexing module, and an interval between downlink wavelengths of adjacent ones of the downlink channels is a channel interval of the periodic first-stage wavelength division multiplexing module.

1×M second-stage wavelength division multiplexing modules divide downlink wavelengths of the first-stage branch optical fibers into M bands, where the downlink wavelengths within the different bands are distributed to corresponding second-stage branch optical fibers by the second-stage wavelength division multiplexing modules.

The 1×M second-stage wavelength division multiplexing modules divide M×N uplink wavelengths into M bands, where the second-stage wavelength division multiplexing modules multiplex the uplink wavelengths within the different bands from the corresponding second-stage branch optical fibers.

The 1×N first-stage wavelength division multiplexing modules multiplex the M×N uplink wavelengths input by the first-stage branch optical fibers of N uplink channels to an uplink output channel, where each of the uplink channels includes M uplink wavelengths with equal intervals, the interval of the M uplink wavelengths within each of the uplink channels is equal to one multiplexing cycle of the first-stage wavelength division multiplexing module, and an interval between uplink wavelengths of adjacent ones of the uplink channels is a channel interval of the first-stage wavelength division multiplexing module; where N and M are positive integers greater than 1.

In a case where the first-stage wavelength division multiplexing module employs a non-periodic wavelength division multiplexing module and the plurality of second-stage wavelength division multiplexing modules employ periodic wavelength division multiplexing modules, the 1×N first-stage wavelength division multiplexing module divides M×N downlink wavelengths of the trunk optical fiber into N bands, where downlink wavelengths within the different bands are distributed to the corresponding first-stage branch optical fibers by the first-stage wavelength division multiplexing modules.

The 1 ×M second-stage wavelength division multiplexing modules distribute the downlink wavelengths of the first-stage branch optical fibers to M downlink channels, where each of the downlink channels includes N downlink wavelengths with equal intervals, where the interval of the N downlink wavelengths within each of the downlink channels is equal to one multiplexing cycle of the second-stage wavelength division multiplexing modules, and an interval between downlink wavelengths of adjacent ones of the downlink channels is a channel interval of the second-stage wavelength division multiplexing modules.

The 1×M second-stage wavelength division multiplexing modules multiplex M×N uplink wavelengths input from the second-stage branch optical fibers of the M uplink channels to uplink output channels, where each uplink channel includes N uplink wavelengths with equal intervals, the interval of the N uplink wavelengths within each uplink channel is equal to one multiplexing cycle of the second-stage wavelength division multiplexing modules, and an interval between uplink wavelengths of adjacent uplink channels is a channel interval of the second-stage wavelength division multiplexing modules.

The 1×N first-stage wavelength division multiplexing modules divide the uplink wavelengths into N bands, where the first-stage wavelength division multiplexing module multiplexes different uplink wavelengths within the band from the corresponding first-stage branch optical fibers, where N and M are positive integers greater than 1.

In the embodiment of the present invention, the first-stage wavelength division multiplexing module includes an arrayed waveguide grating device, an etched diffraction grating, a thin film filter device, or a fiber grating device; and
the second wavelength division multiplexing module includes an arrayed waveguide grating device, an etched diffraction grating, a thin film filter device, or a fiber grating device.

In the embodiment of the present invention, a device of the periodic wavelength division multiplexing module includes a periodic arrayed waveguide grating device or a periodic etched diffraction grating device.

Preferably, in the embodiment of the present invention, in order to make full use of wavelength channel resources, a channel interval of the non-periodic wavelength division multiplexing module is equal to one multiplexing cycle of the periodic wavelength division multiplexing module. Under a premise of ensuring that each channel of the non-periodic wavelength division multiplexing module includes all wavelengths within each uplink or downlink channel of the periodic wavelength division multiplexing module, the channel interval of the non-periodic wavelength division multiplexing module may be greater than or less than one multiplexing cycle of the periodic wavelength division multiplexing module. Hereinafter, a case where the channel interval of the non-periodic wavelength division multiplexing module is equal to one multiplexing cycle of the periodic wavelength division multiplexing module will be described in detail as a preferred embodiment.

In another embodiment of the present invention, there is further provided an optical network distribution method, including:
a plurality of second-stage wavelength division multiplexing modules of an optical distribution network receive downlink optical signals from a first-stage wavelength division multiplexing module of the optical distribution network; and
the first-stage wavelength division multiplexing module receives uplink optical signals from the plurality of second-stage wavelength division multiplexing modules, where in a case that the first-stage wavelength division multiplexing module employs a periodic wavelength division multiplexing module and the plurality of second-stage wavelength division multiplexing modules employ non-periodic wavelength division multiplexing modules, or the first-stage wavelength division multiplexing employs a non-periodic wavelength division multiplexing module and the plurality of second-stage wavelength division multiplexing modules employ periodic wavelength division multiplexing modules, the plurality of second-stage wavelength division multiplexing modules are the same device.

In the embodiment of the present invention, in a case where the first-stage wavelength division multiplexing module employs the periodic wavelength division multiplexing module and the plurality of second-stage wavelength division multiplexing modules employ non-periodic wavelength division multiplexing modules, FIG. 2a is a first flow diagram of optical network distribution according to an embodiment of the present invention, and as shown in FIG. 2a, a processing flow of downlink wavelengths of the optical distribution network includes:
step S202, 1×N first-stage wavelength division multiplexing modules distribute M×N downlink wavelengths of a trunk optical fiber to N downlink channels, where each of the downlink channels includes M downlink wavelengths with equal intervals, where the interval of the M downlink wavelengths within each of the downlink channels is equal to one multiplexing cycle of the first-stage wavelength division multiplexing module, and an interval between downlink wavelengths of adjacent ones of the downlink channels is a channel interval of the first-stage wavelength division multiplexing module; and
step S204, 1 ×M second-stage wavelength division multiplexing modules divide downlink wavelengths of first-stage branch optical fibers into M bands, where the downlink wavelengths within different bands are distributed to corresponding second-stage branch optical fibers by the second-stage wavelength division multiplexing modules.

FIG. 2b is a second flow diagram of optical network distribution according to an embodiment of the present invention. As shown in FIG. 2b, a processing flow of uplink wavelengths of an optical distribution network includes:
step S206, 1×M second-stage wavelength division multiplexing modules divide M×N uplink wavelengths into M bands, where the second-stage wavelength division multiplexing modules multiplex the uplink wavelengths within different bands from the corresponding second-stage branch optical fibers; and
step S208, 1×N first-stage wavelength division multiplexing modules multiplex M×N uplink wavelengths input by first-stage branch optical fibers of N uplink channels to an uplink output channel, where each of the uplink channels includes M uplink wavelengths with equal intervals, the interval of the M uplink wavelengths within each of the uplink channels is equal to one multiplexing cycle of the first-stage wavelength division multiplexing module, and an interval between uplink wavelengths of adjacent ones of the uplink channels is a channel interval of the first-stage wavelength division multiplexing modules.

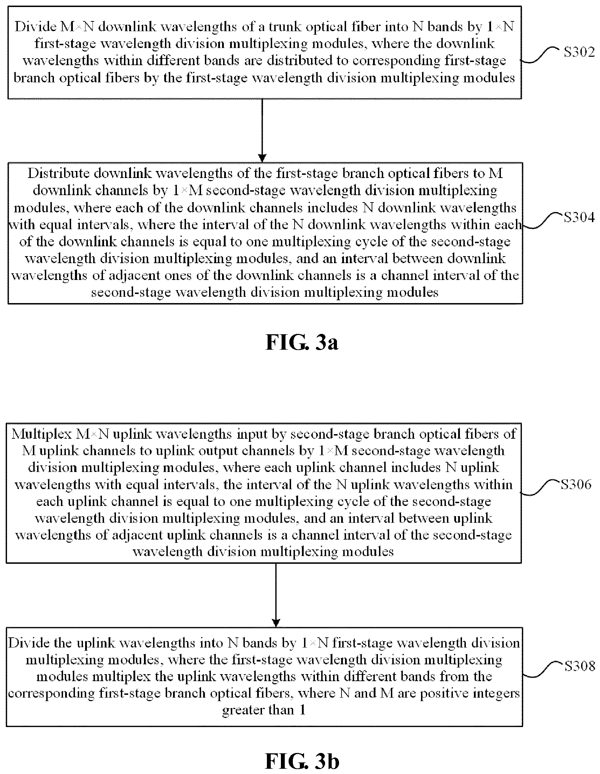

In the embodiment of the present invention, in a case where the first-stage wavelength division multiplexing module employs the non-periodic wavelength division multiplexing module and the plurality of second-stage wavelength division multiplexing modules employ the periodic wavelength division multiplexing modules, FIG. 3a is a third flow diagram of optical network distribution according to an embodiment of the present invention, and as shown in FIG. 3a, a processing flow of downlink wavelengths of an optical distribution network includes the following steps:
step S302, 1×N first-stage wavelength division multiplexing modules divide M×N downlink wavelengths of a trunk optical fiber into N bands, where the downlink wavelengths within different bands are distributed to corresponding first-stage branch optical fibers by the first-stage wavelength division multiplexing modules; and
step S304, 1×M second-stage wavelength division multiplexing modules distribute downlink wavelengths of the first-stage branch optical fiber to M downlink channels, where each of the downlink channels includes N downlink wavelengths with equal intervals, where the interval of the N downlink wavelengths within each of the downlink channels is equal to one multiplexing cycle of the second-stage wavelength division multiplexing modules, and an interval between downlink wavelengths of adjacent ones of the downlink channels is a channel interval of the second-stage wavelength division multiplexing modules.

FIG. 3b is a fourth flow diagram of optical network distribution according to an embodiment of the present invention. As shown in FIG. 3b, a processing flow of uplink wavelengths of an optical distribution network includes:
step S306, 1×M second-stage wavelength division multiplexing modules multiplex M×N uplink wavelengths input by second-stage branch optical fibers of M uplink channels to uplink output channels, where each uplink channel includes N uplink wavelengths with equal intervals, the interval of the N uplink wavelengths within each uplink channel is equal to one multiplexing cycle of the second-stage wavelength division multiplexing modules, and an interval between uplink wavelengths of adjacent uplink channels is a channel interval of the second-stage wavelength division multiplexing modules; and
step S308, 1×N first-stage wavelength division multiplexing modules divide the uplink wavelengths into N bands, where the first-stage wavelength division multiplexing modules multiplex the uplink wavelengths within the different bands from the corresponding first-stage branch optical fibers, where N and M are positive integers greater than 1.

In the embodiment of the present invention, the first-stage wavelength division multiplexing module includes an arrayed waveguide grating device, an etched diffraction grating, a thin film filter device, or a fiber grating device; and
the second wavelength division multiplexing module includes an arrayed waveguide grating device, an etched diffraction grating, a thin film filter device, or a fiber grating device.

In the embodiment of the present invention, a device of the periodic wavelength division multiplexing module includes a periodic arrayed waveguide grating device or a periodic etched diffraction grating device.

The present invention will be described in detail below in conjunction with preferred embodiments and implementation manners.

### A first preferred embodiment

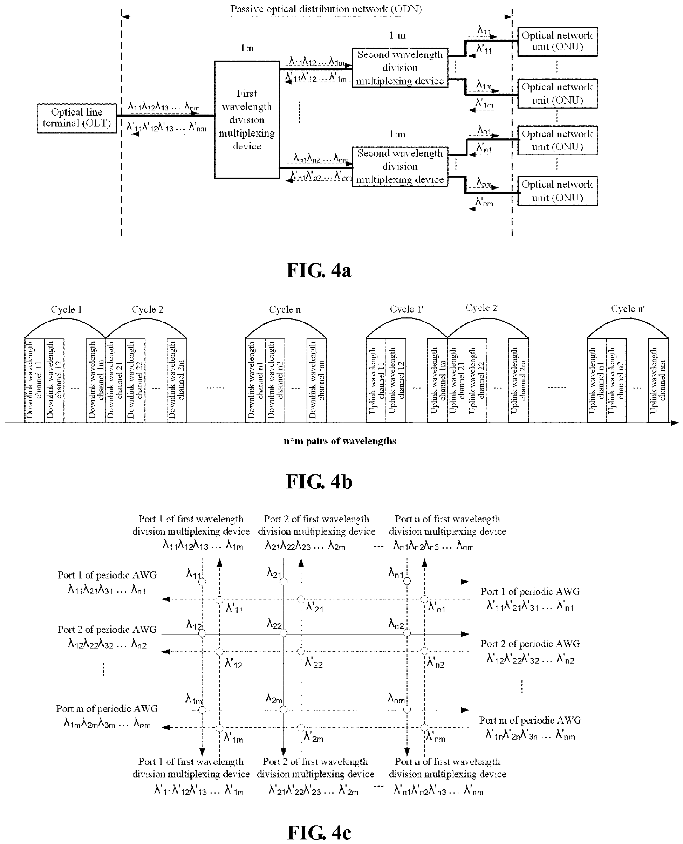

The preferred embodiment of the present invention provides a passive optical distribution network. FIG. 4a is a first schematic diagram showing a two-stage wavelength division multiplexing optical distribution network according to a first preferred embodiment of the present invention. As shown in FIG. 4a, the passive optical distribution network at least includes a first wavelength division multiplexing module, a plurality of second wavelength division multiplexing modules, a trunk optical fiber, first-stage branch optical fibers and second-stage branch optical fibers.

The first wavelength division multiplexing module (which is equivalent to the first-stage wavelength division multiplexing module in the above embodiment) is connected with the trunk optical fiber and the first-stage branch optical fibers, and configured to receive downlink optical signals input from the trunk optical fiber, transmit the downlink optical signals to the corresponding first-stage branch optical fibers, receive uplink optical signals input from the first-stage branch optical fibers and multiplex the uplink optical signals to the trunk optical fiber.

As shown in FIG. 4a, the first wavelength division multiplexing module includes one public port and n branch ports and may include devices such as a thin film filter-type wavelength division multiplexing device, a splitter and an optical fiber grating-type filter or an arrayed waveguide grating, where the public port is connected with the trunk optical fiber, and the branch ports are connected with the first-stage branch optical fibers.

FIG. 4c is a third schematic diagram showing a two-stage wavelength division multiplexing optical distribution network according to the first preferred embodiment of the present invention. As shown in FIG. 4c, the first wavelength division multiplexing module divides downlink WDM wavelength optical signals input from the public port into n bands to be respectively output to the corresponding branch ports; for example, λ11, λ12, ... λ1m are output from the port 1; λ21, λ22, ... λ2m are output from the port 2; successively, λn1, λn2, ... λnm are output from the port n; uplink WDM wavelength optical signals, which are input from uplink branch ports, within n different bands are multiplexed to the public port; for example, λ'11, λ'12, ... λ'1m are input from the port 1; λ'21, λ'22, ... λ'2m are input from the port 2; and successively, λ'n1, λ'n2, ... λ'nm are input from the port n.

The second wavelength division multiplexing modules (which are equivalent to the second-stage wavelength division multiplexing modules in the above embodiment) are connected with the first-stage branch optical fibers and the second-stage branch optical fibers, and configured to receive downlink optical signals input from the first-stage branch optical fibers, transmit the downlink optical signals to the corresponding first-stage branch optical fibers, receive uplink optical signals input from the second-stage branch optical fibers and multiplex the uplink optical signals to the first-stage branch optical fibers.

Each of the second wavelength division multiplexing modules includes one public port and m branch ports and may include devices such as a periodic arrayed waveguide grating or a periodic etched diffraction grating, where the public port is connected with the first-stage branch optical fibers, and the branch ports are connected with the second-stage branch optical fibers.

As shown in FIG. 4a, the second wavelength division multiplexing modules respectively output m downlink WDM wavelength optical signals input from the public port to the corresponding branch ports and multiplex m uplink WDM wavelength optical signals, which are input from uplink branch ports, within different bands to the public port.

FIG. 4b is a second schematic diagram showing a two-stage wavelength division multiplexing optical distribution network according to the first preferred embodiment of the present invention. As shown in FIG. 4b, the second wavelength division multiplexing modules have periodic repeatability for wavelength distribution and multiplexing. For example, n × m downlink wavelength channels are repeatedly distributed for n cycles in a way that m wavelength channels are used as one cycle; and n × m uplink wavelength channels are repeatedly multiplexed for n cycles in a way that m wavelength channels are used as one cycle.

The wavelength distribution and multiplexing cycle of each second wavelength division multiplexing module forms a free spectral range of the periodic arrayed waveguide grating. As shown in FIG. 4c, downlink wavelengths such as λ11, λ21, ... λn1 input from the public port of the periodic arrayed waveguide grating are output from the branch port 1 of the periodic arrayed waveguide grating; downlink wavelengths such as λ12, λ22, ... λn2 input from the public port of the periodic arrayed waveguide grating are output from the branch port 2 of the periodic arrayed waveguide grating; successively, downlink wavelengths such as λ1m, λ2m, ... λnm input from the public port of the periodic arrayed waveguide grating are ouptut from the branch port m of the periodic arrayed waveguide grating; uplink wavelengths such as λ'11, λ'21, ... λ'n1 are input from the branch port 1 of the periodic arrayed waveguide grating, multiplexed to the public port and then output; wavelengths such as λ'12, λ'22, ... λ'n2 are input from the branch port 2 of the periodic arrayed waveguide grating, multiplexed to the public port and then output; and successively, wavelengths such as λ'1m, λ'2m, ... λ'nm are input from the branch port m of the periodic arrayed waveguide grating, multiplexed to the public port and then output.

As shown in FIG. 4c, after n*m pairs of uplink and downlink optical signals with wavelengths being (λ11, λ'11), (λ12, λ'12), ... (λnm, λ'nm) and the like are subjected to wavelength routing by using a two-stage wavelength division multiplexing module in the passive optical distribution network, the point to multi-point correspondence between the OLT and the ONUs is achieved, and each ONU is distributed to a unique uplink and downlink wavelength pair. Meanwhile, second-stage splitters are the same periodic arrayed waveguide grating in the passive optical distribution network.

### A second preferred embodiment

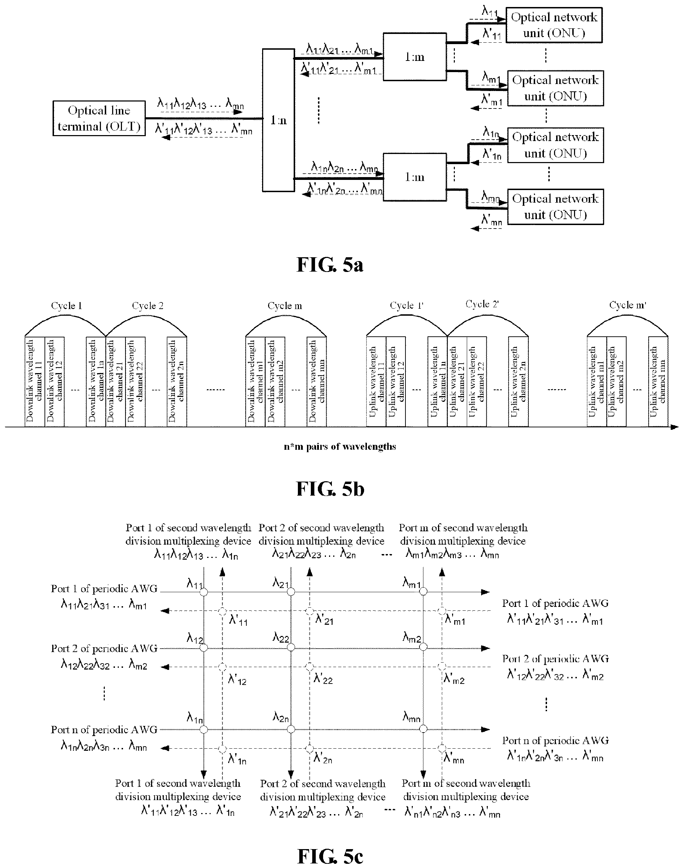

The preferred embodiment of the present invention further provides a passive optical distribution network. FIG. 5a is a first schematic diagram showing a two-stage wavelength division multiplexing optical distribution network according to a second preferred embodiment of the present invention. As shown in FIG. 5a, the passive optical distribution network includes a first wavelength division multiplexing module, second wavelength division multiplexing modules, a trunk optical fiber, first-stage branch optical fibers and second-stage branch optical fibers; where
the first wavelength division multiplexing module is connected with the trunk optical fiber and the first-stage branch optical fibers and configured to receive downlink optical signals input from the trunk optical fiber, transmit the downlink optical signals to the corresponding first-stage branch optical fibers, receive uplink optical signals input from the first-stage branch optical fibers and multiplex the uplink optical signals to the trunk optical fiber; and
the first wavelength division multiplexing module includes one public port and n branch ports and may include devices such as a periodic arrayed waveguide grating or a periodic etched diffraction grating, the public port is connected with the trunk optical fiber, and the branch ports are connected with the first-stage branch optical fibers.

FIG. 5b is a second schematic diagram showing a two-stage wavelength division multiplexing optical distribution network according to the second preferred embodiment of the present invention. As shown in FIG. 5b, the first wavelength division multiplexing module divides downlink WDM wavelength optical signals input from the public port into n paths of periodically repeated wavelength signals to be respectively output to the corresponding branch ports, and the repetition cycle of each path of optical signal is m; the first wavelength division multiplexing module multiplexes periodically repeated wavelength signals, which are input from the uplink branch ports, within n different channels to the public port, and the repetition cycle of each path of optical signal is m; and
the second wavelength division multiplexing modules are connected with the first-stage branch optical fibers and the second-stage branch optical fibers and configured to receive downlink optical signals input from the first-stage branch optical fibers, transmit the downlink optical signals to the corresponding first-stage branch optical fibers, receive uplink optical signals input from the second-stage branch optical fibers and multiplex the uplink optical signals to the first-stage branch optical fibers.

As shown in FIG. 5b, the first wavelength division multiplexing module has periodic repeatability for wavelength distribution and multiplexing. For example, m × n downlink wavelength channels are repeatedly distributed for m cycles in a way that n wavelength channels are used as one cycle; n × m uplink wavelength channels are repeatedly multiplexed for m cycles in a way that n wavelength channels are used as one cycle.

The wavelength distribution and multiplexing cycle of the first wavelength division multiplexing module forms a free spectral range of the periodic arrayed waveguide grating. FIG. 5c is a third schematic diagram showing a two-stage wavelength division multiplexing optical distribution network according to the second preferred embodiment of the present invention. As shown in FIG. 5c, downlink wavelengths such as λ11, λ21, ... λml input from the public port of the periodic arrayed waveguide grating are output from the branch port 1 of the periodic arrayed waveguide grating; downlink wavelengths such as λ12, λ22, ... λm2 input from the public port of the periodic arrayed waveguide grating are output from the branch port 2 of the periodic arrayed waveguide grating; successively, downlink wavelengths such as λ1n, λ2n, ... λmn input from the public port of the periodic arrayed waveguide grating are output from the branch port n of the periodic arrayed waveguide grating; uplink wavelengths such as λ'11, λ'21, ... λ'm1 are input from the branch port 1 of the periodic arrayed waveguide grating, multiplexed to the public port and then output; wavelengths such as λ'12, λ'22, ... λ'm2 are input from the branch port 2 of the periodic arrayed waveguide grating, multiplexed to the public port and then output; and successively, wavelengths such as λ'1n, λ'2n, ... λ'mn are input from the branch port n of the periodic arrayed waveguide grating, multiplexed to the public port and then output.

The second wavelength division multiplexing module includes one public port and m branch ports and may include devices such as a thin film filter-type wavelength division multiplexing device, a splitter and an optical fiber grating-type filter or an arrayed waveguide grating, where the public port is connected with the first-stage branch optical fiber, and the branch ports are connected with the second-stage branch optical fibers.

As shown in FIG. 5c, the second wavelength division multiplexing module respectively outputs m periodically repeated downlink WDM wavelength optical signals input from the public port to the corresponding branch ports at a repetition period interval; for example, downlink wavelengths such as λ11, λ12, ... λ1n input from the public ports are output from the branch ports 1; downlink wavelengths such as λ21, λ22, ... λ2n input from the public ports are output from the branch ports 2; successively, downlink wavelengths such as λm1, λm2, ... λmn input from the public ports are output from the branch ports m; m uplink WDM wavelength optical signals within different cycles , which are input from uplink branch ports, are multiplexed to the public port; for example, uplink wavelengths such as λ'11, λ'12, ... λ'1n are input from the branch ports 1; uplink wavelengths such as λ'21, λ'22, ... λ'2n are input from the branch ports 2; and successively, uplink wavelengths such as λ'm1, λ'm2, ... λ'mn are input from the branch ports m.

As shown in FIG. 5c, after m × n pairs of uplink and downlink optical signals with wavelengths being (λ11, λ'11), (λ12, λ'12), ... (λnm, λ'nm) and the like are subjected to wavelength routing by using a two-stage wavelength division multiplexing module in the passive optical distribution network, the point to multi-point correspondence between the OLT and the ONUs is achieved, and each ONU is distributed to a unique uplink and downlink wavelength pair. Meanwhile, second-stage splitters are the same non-periodically repeated wavelength division multiplexing module in the passive optical distribution network.

### A third preferred embodiment

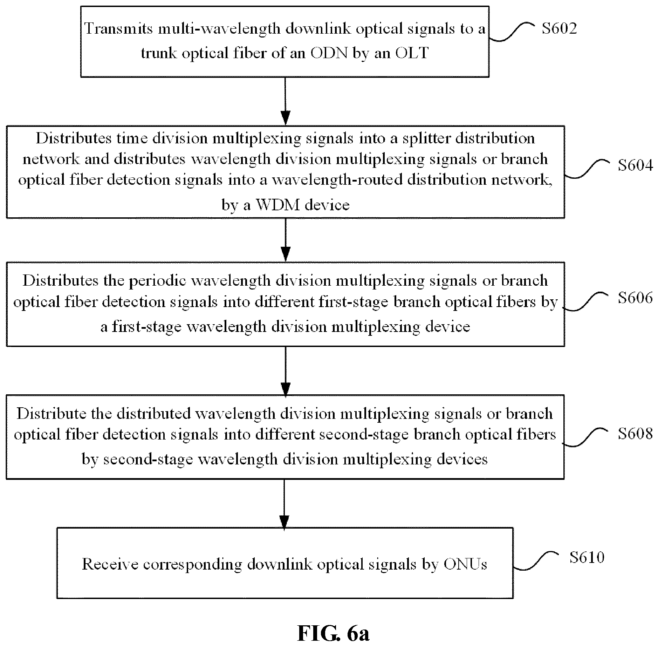

The embodiment of the present invention provides an optical distribution method. FIG. 6a is a first schematic diagram showing an implementation process of an optical distribution method according to a third preferred embodiment of the present invention. As shown in FIG. 6a, in a downlink direction, the method includes the following steps:
step S602, an OLT sends multi-wavelength downlink optical signals to a trunk optical fiber of an ODN;
step S604, a WDM device distributes time division multiplexing signals into a splitter distribution network and distributes wavelength division multiplexing signals or branch optical fiber detection signals into a wavelength-routed distribution network;
step S606, a first-stage wavelength division multiplexing device distributes the periodic wavelength division multiplexing signals or branch optical fiber detection signals into different first-stage branch optical fibers;
step S608, second-stage wavelength division multiplexing devices distribute the distributed wavelength division multiplexing signals or branch optical fiber detection signals into different second-stage branch optical fibers; and
step S610, ONUs receive corresponding downlink optical signals.

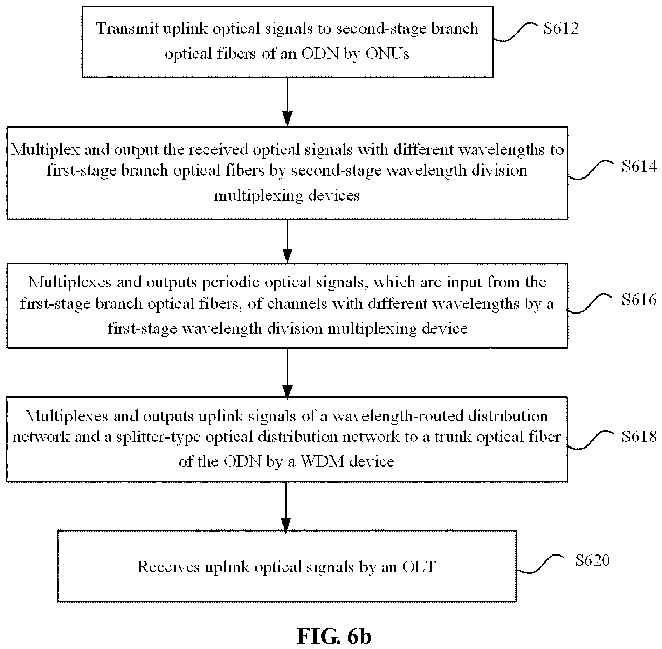

FIG. 6b is a second schematic diagram showing an implementation process of an optical distribution method according to the third preferred embodiment of the present invention. As shown in FIG. 6b, in an uplink direction, the method includes the following steps:
step S612, ONUs send uplink optical signals to second-stage branch optical fibers of an ODN;
step S614, second-stage wavelength division multiplexing devices multiplex and output the received optical signals with different wavelengths to first-stage branch optical fibers;
step S616, a first-stage wavelength division multiplexing device multiplexes and outputs periodic optical signals, which are input from the first-stage branch optical fibers, of channels with different wavelengths;
step S618, a WDM device multiplexes and outputs uplink signals of a wavelength-routed distribution network and a splitter-type optical distribution network to a trunk optical fiber of the ODN; and
step S620, an OLT receives uplink optical signals.

In the preferred embodiment, the steps in the uplink direction and the steps in the downlink direction are carried out without conforming to a precedence order and are carried out juxtaposedly and simultaneously.

### A fourth preferred embodiment

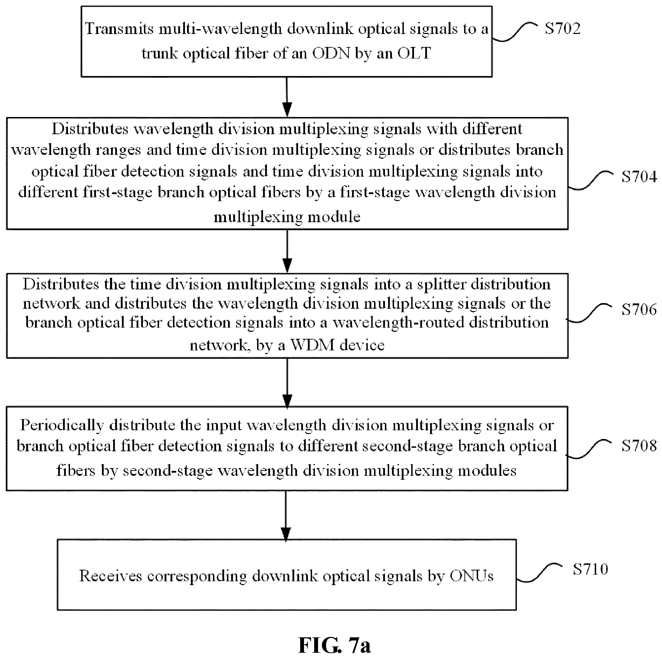

The embodiment of the present invention further provides an optical distribution method. FIG. 7a is a first schematic diagram showing an implementation process of an optical distribution method according to a fourth preferred embodiment of the present invention. As shown in FIG. 7a, in a downlink direction, the method includes the following steps:
step S702, an OLT sends multi-wavelength downlink optical signals to a trunk optical fiber of an ODN;
step S704, a first-stage wavelength division multiplexing module distributes wavelength division multiplexing signals with different wavelength ranges and time division multiplexing signals or distributes branch optical fiber detection signals and time division multiplexing signals into different first-stage branch optical fibers;
step S706, a WDM device distributes the time division multiplexing signals into a splitter distribution network and distributes the wavelength division multiplexing signals or the branch optical fiber detection signals into a wavelength-routed distribution network;
step S708, second-stage wavelength division multiplexing modules periodically distribute the input wavelength division multiplexing signals or branch optical fiber detection signals to different second-stage branch optical fibers; and
step S710, ONUs receive corresponding downlink optical signals.

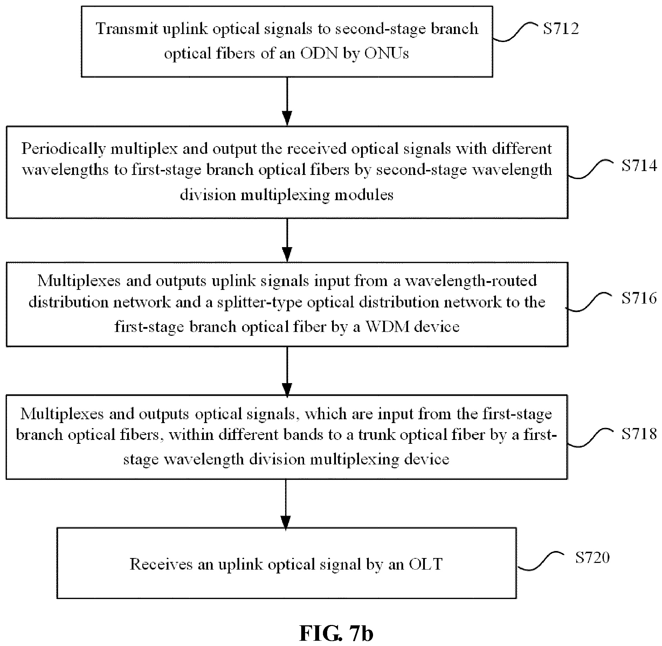

The embodiment of the present invention further provides an optical distribution method. FIG. 7b is a second schematic diagram showing an implementation process of an optical distribution method according to a fourth preferred embodiment of the present invention. As shown in FIG. 7b, in a downlink direction, the method includes the following steps:
step S712, ONUs send uplink optical signals to second-stage branch optical fibers of an ODN;
step S714, second-stage wavelength division multiplexing modules periodically multiplex and output the received optical signals with different wavelengths to first-stage branch optical fibers;
step S716, a WDM device multiplexes and outputs uplink signals input from a wavelength-routed distribution network and a splitter-type optical distribution network to the first-stage branch optical fibers;
step S718, a first-stage wavelength division multiplexing device multiplexes and outputs optical signals, which are input from the first-stage branch optical fibers, within different bands to the trunk optical fiber; and
step S720, an OLT receives uplink optical signals.

In the embodiment, the steps in the uplink direction and the steps in the downlink direction are carried out without conforming to a precedence order and are carried out juxtaposedly and simultaneously.

In the embodiment, the steps S604, S618, S706 and S716 are optional steps.

The embodiment of the present invention further provides a computer-readable storage medium in which computer-executable instructions are stored, and the computer-executable instructions are used for performing any one of the the optical network distribution methods.

### A fifth preferred embodiment

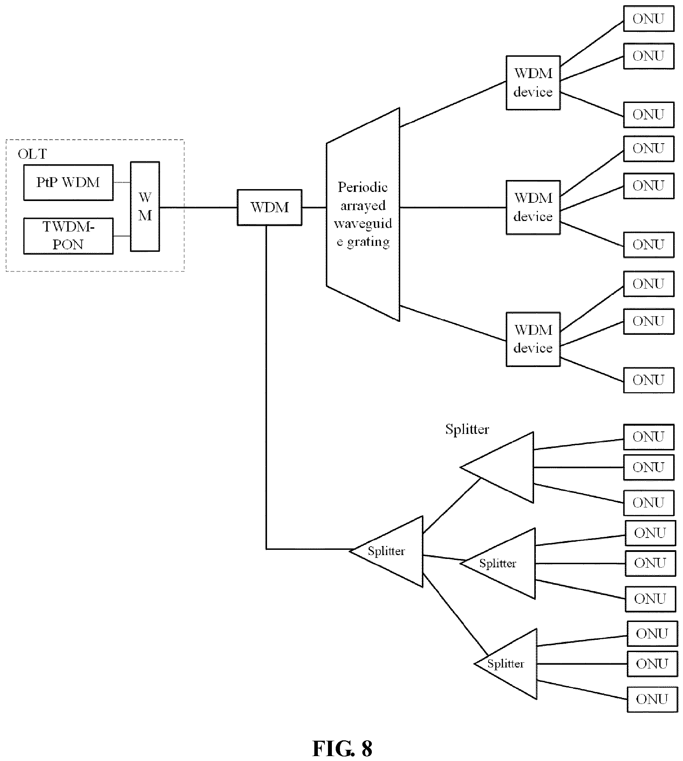

FIG. 8 is a schematic diagram showing a two-stage wavelength division multiplexing and time division multiplexing coexisting optical distribution network according to a fifth preferred embodiment of the present invention. As shown in FIG. 8, the ODN and the optical distribution method may be applied to a PON as shown in FIG. 8, and the PON employs the ODN and the optical distribution method provided by the embodiment of the present invention. As shown in FIG. 8, the PON is a TWDM-PON and PtP WDM coexistence network. In a downlink direction, TWDM-PON optical signals and PtP WDM optical signals transmitted by the OLT are respectively distributed into a splitter-type ODN and a wavelength routing-type ODN by a WDM device in the ODN. The wavelength routing-type ODN for transmitting the PtP WDM optical signals is a two-stage splitter-type WDM ODN based on a periodic arrayed waveguide grating provided by the present invention. In an uplink direction, the uplink optical signals transmitted by the PtP WDM ONU are transmitted back to the OLT together with the TWDM-PON optical signals by the WDM device after being subjected to two-stage multiplexing by the WDM device and the periodic arrayed waveguide grating. In the distribution network, a periodic arrayed waveguide grating device and a method for periodically distributing uplink and downlink wavelengths are employed at the first stage, and therefore, all WDM devices for second-stage splitting are the same device.

### A sixth preferred embodiment

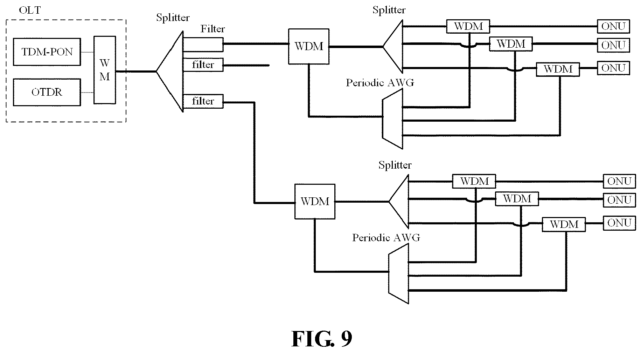

FIG. 9 is a schematic diagram showing a two-stage branch optical fiber detection network according to a sixth preferred embodiment of the present invention. As shown in FIG. 9, the ODN and the optical distribution method may also be applied to a PON as shown in FIG. 9, and the PON employs the ODN and the optical distribution method provided by the present invention. As shown in FIG. 9, the PON is a TDM-PON and branch optical fiber fault detection networks thereof. By using the distribution method provided by the present invention, in a downlink direction, TDM-PON optical signals and OTDR optical signals transmitted by the OLT are distributed into the first-stage branch optical fibers by a first-stage splitter in the ODN. Downlink TDM-PON optical signals and OTDR signals input from the first-stage branch optical fibers are respectively distributed into second-stage splitters and second-stage wavelength division multiplexing devices by the WDM device. Each of the second-stage wavelength division multiplexing devices is a periodic arrayed waveguide grating, and all the second-stage wavelength division multiplexing devices are the same device. In an uplink direction, the uplink optical signals trasnmitted by the TDM-PON ONU and OTDR signals which are reflected by a link and pass through the periodic arrayed waveguide grating are transmitted back to the OLT by the first-stage splitter after being multiplexed by the WDM device. In the distribution network, a periodic arrayed waveguide grating device and a method for periodically distributing uplink and downlink wavelengths are employed at the second stage, and therefore, all the WDM devices for second-stage splitting are the same device.

In the above, a downlink input side of each of the first-stage wavelength division multiplexing device and the second-stage wavelength division multiplexing devices may include one and more ports, 1 × N first-stage wavelength division multiplexing modules and 1 × M second-stage wavelength division multiplexing modules are only used as preferred embodiments of the present invention.

In the PON, the first-stage splitter includes an optical router and a WDM filter so as to be not only capable of realizing power distribution of TDM signals, but also capable of realizing wavelength distribution of OTDR signals.

Based on the description of the implementation maners, those skilled in the art may cearly know that the method according to the embodiment may be realized by virtue of software and a necessary universal hardware platform.

The above description should not be construed as limitations of the present invention, but is merely used as preferred embodiments thereof, and any alterations and variations may be made by those skilled in the art. Any modifications, equivalent substitutions, improvements and the like made within the spirit and principle of the present invention should fall into a protective scope of the present invention.

### Industrial Applicability

The embodiment of the present invention provides an optical network distribution method and an optical distribution network, where the optical distribution network employs a periodic wavelength division multiplexing module, all the second-stage WDM modules are same due to periodic distribution of uplink and downlink WDM optical signals, and the second-stage WDM modules may be interchanged, so that the problem that no interchangeability exists among second-stage wavelength splitters due to different wavelengths distributed by the second-stage wavelength splitters in a two-stage splitter and wavelength routing-type ODN is solved, the uniformity of the second-stage wavelength splitters is realized, the large-scale production cost of the splitters is lowered, and the maintenance cost of the splitters is reduced.

## Claims

1. An optical distribution network, comprising a first-stage wavelength division multiplexing module and a plurality of second-stage wavelength division multiplexing modules; wherein
the second-stage wavelength division multiplexing modules are configured to receive a downlink optical signal from the first-stage wavelength division multiplexing module; and the first-stage wavelength division multiplexing module is configured to receive uplink optical signals from the plurality of second-stage wavelength division multiplexing modules, and
in a case that the first-stage wavelength division multiplexing module employs a periodic wavelength division multiplexing module and the plurality of second-stage wavelength division multiplexing modules employ non-periodic wavelength division multiplexing modules, or in a case that the first-stage wavelength division multiplexing module employs a non-periodic wavelength division multiplexing module and the plurality of second-stage wavelength division multiplexing modules employ periodic wavelength division multiplexing modules, the plurality of second-stage wavelength division multiplexing modules are the same device.

2. The optical distribution network according to claim 1, further comprising a trunk optical fiber, first-stage branch optical fibers, and second-stage branch optical fibers;
the first-stage wavelength division multiplexing module employs the periodic wavelength division multiplexing module and the plurality of second-stage wavelength division multiplexing modules employ the non-periodic wavelength division multiplexing modules,
the first-stage wavelength division multiplexing module is configured to: distribute M×N downlink wavelengths of the trunk optical fiber to N downlink channels, wherein each of the downlink channels comprises M downlink wavelengths with equal intervals, wherein the interval of the M downlink wavelengths within each of the downlink channels is equal to one multiplexing cycle of the first-stage wavelength division multiplexing module, and an interval between downlink wavelengths of adjacent ones of the downlink channels is a channel interval of the first-stage wavelength division multiplexing module; multiplex M×N uplink wavelengths input by the first-stage branch optical fibers of the N uplink channels to an uplink output channel, wherein each of the uplink channels comprises M uplink wavelengths with equal intervals, the interval of the M uplink wavelengths within each of the uplink channels is equal to one multiplexing cycle of the first-stage wavelength division multiplexing module, and an interval between uplink wavelengths of adjacent ones of the uplink channels is a channel interval of the first-stage wavelength division multiplexing module;
the second-stage wavelength division multiplexing modules are configured to: divide the downlink wavelengths of the first-stage branch optical fibers into M bands, wherein the downlink wavelengths within different bands are distributed to the corresponding second-stage branch optical fibers by the second-stage wavelength division multiplexing modules; and divide M×N uplink wavelengths into M bands, wherein the second-stage wavelength division multiplexing modules multiplex the uplink wavelengths within different bands from the corresponding second-stage branch optical fibers;
wherein N and M are positive integers greater than 1.

3. The optical distribution network according to claim 1, further comprising a trunk optical fiber, first-stage branch optical fibers, and second-stage branch optical fibers;
the first-stage wavelength division multiplexing module employs the non-periodic wavelength division multiplexing module and the plurality of second-stage wavelength division multiplexing modules employ the periodic wavelength division multiplexing modules,
the first-stage wavelength division multiplexing module is configured to: divide M×N downlink wavelengths of the trunk optical fiber into N bands, wherein the downlink wavelengths within different bands are distributed to the corresponding first-stage branch optical fibers by the first-stage wavelength division multiplexing module; and divide the uplink wavelengths into N bands, wherein the first-stage wavelength division multiplexing module multiplexes the uplink wavelengths within different bands from the corresponding first-stage branch optical fibers;
the second-stage wavelength division multiplexing modules are configured: to distribute the downlink wavelengths of the first-stage branch optical fibers to M downlink channels, wherein each of the downlink channels comprises N downlink wavelengths with equal intervals, wherein the interval of the N downlink wavelengths within each of the downlink channels is equal to one multiplexing cycle of the second-stage wavelength division multiplexing modules, and an interval between downlink wavelengths of adjacent ones of the downlink channels is a channel interval of the second-stage wavelength division multiplexing modules; multiplex M×N uplink wavelengths input by the second-stage branch optical fibers of M uplink channels to an uplink output channel, wherein each of the uplink channels comprises N uplink wavelengths with equal intervals, the interval of the N uplink wavelengths within each of the uplink channels is equal to one multiplexing cycle of the second-stage wavelength division multiplexing modules, and an interval between uplink wavelengths of adjacent ones of the uplink channels is a channel interval of the second-stage wavelength division multiplexing modules;
wherein N and M are positive integers greater than 1.

4. The optical distribution network according to claim 1, wherein
the first-stage wavelength division multiplexing module comprises an arrayed waveguide grating device, an etched diffraction grating, a thin film filter device, or a fiber grating device; and
the second wavelength division multiplexing modules comprise arrayed waveguide grating devices, etched diffraction gratings, thin film filter devices, or fiber grating devices.

5. The optical distribution network according to any one of claims 1 to 4, wherein
a device of the periodic wavelength division multiplexing module comprises a periodic arrayed waveguide grating device or a periodic etched diffraction grating device.

6. An optical network distribution method, comprising:
receiving downlink optical signals from a first-stage wavelength division multiplexing module of an optical distribution network by a plurality of second-stage wavelength division multiplexing modules of the optical distribution network; and receiving uplink optical signals from the plurality of second-stage wavelength division multiplexing modules by the first-stage wavelength division multiplexing module, wherein
in a case that the first-stage wavelength division multiplexing module employs a periodic wavelength division multiplexing module and the plurality of second-stage wavelength division multiplexing modules employ non-periodic wavelength division multiplexing modules, or in a case that the first-stage wavelength division multiplexing module employs a non-periodic wavelength division multiplexing module and the plurality of second-stage wavelength division multiplexing modules employ periodic wavelength division multiplexing modules, the plurality of second-stage wavelength division multiplexing modules are the same device.

7. The method according to claim 6, wherein the first-stage wavelength division multiplexing module employs the periodic wavelength division multiplexing module and the plurality of second-stage wavelength division multiplexing modules employ the non-periodic wavelength division multiplexing modules;
the receiving the downlink optical signals from the first-stage wavelength division multiplexing module of the optical distribution network by the plurality of second-stage wavelength division multiplexing modules of the optical distribution network; and receiving the uplink optical signals from the plurality of second-stage wavelength division multiplexing modules by the first-stage wavelength division multiplexing module comprise:
distributing M×N downlink wavelengths of a trunk optical fiber to N downlink channels by the first-stage wavelength division multiplexing module, wherein each of the downlink channels comprises M downlink wavelengths with equal intervals, wherein the interval of the M downlink wavelengths within each of the downlink channels is equal to one multiplexing cycle of the first-stage wavelength division multiplexing module, and an interval between downlink wavelengths of adjacent ones of the downlink channels is a channel interval of the first-stage wavelength division multiplexing module;
dividing downlink wavelengths of first-stage branch optical fibers into M bands by the second-stage wavelength division multiplexing modules, wherein the downlink wavelengths within different bands are distributed to corresponding second-stage branch optical fibers by the second-stage wavelength division multiplexing modules;
dividing M×N uplink wavelengths into M bands by the second-stage wavelength division multiplexing modules, wherein the second-stage wavelength division multiplexing modules multiplex the uplink wavelengths within different bands from the corresponding second-stage branch optical fibers; and
multiplexing the M×N uplink wavelengths input by the first-stage branch optical fibers of N uplink channels to an uplink output channel by the first-stage wavelength division multiplexing module, wherein each of the uplink channels comprises M uplink wavelengths with equal intervals, the interval of the M uplink wavelengths within each of the uplink channels is equal to one multiplexing cycle of the first-stage wavelength division multiplexing module, and an interval between uplink wavelengths of adjacent ones of the uplink channels is a channel interval of the first-stage wavelength division multiplexing module; wherein N and M are positive integers greater than 1.

8. The method according to claim 6, wherein the first-stage wavelength division multiplexing module employs the non-periodic wavelength division multiplexing module and the plurality of second-stage wavelength division multiplexing modules employ the periodic wavelength division multiplexing modules,
the receiving the downlink optical signals from the first-stage wavelength division multiplexing module of the optical distribution network by the plurality of second-stage wavelength division multiplexing modules of the optical distribution network; and receiving the uplink optical signals from the plurality of second-stage wavelength division multiplexing modules by the first-stage wavelength division multiplexing module comprise:
dividing M×N downlink wavelengths of a trunk optical fiber into N bands by the first-stage wavelength division multiplexing module, wherein the downlink wavelengths within different bands are distributed to corresponding first-stage branch optical fibers by the first-stage wavelength division multiplexing module;
distributing the downlink wavelengths of the first-stage branch optical fiber to M downlink channels by the second-stage wavelength division multiplexing modules, wherein each of the downlink channels comprises N downlink wavelengths with equal intervals, wherein the interval of the N downlink wavelengths within each of the downlink channels is equal to one multiplexing cycle of the second-stage wavelength division multiplexing modules, and an interval between downlink wavelengths of adjacent ones of the downlink channels is a channel interval of the second-stage wavelength division multiplexing modules;
multiplexing M×N uplink wavelengths input by the second-stage branch optical fibers of M uplink channels to an uplink output channel by the second-stage wavelength division multiplexing modules, wherein each of the uplink channels comprises N uplink wavelengths with equal intervals, the interval of the N uplink wavelengths within each of the uplink channels is equal to one multiplexing cycle of the second-stage wavelength division multiplexing modules, and an interval between uplink wavelengths of adjacent ones of the uplink channels is a channel interval of the second-stage wavelength division multiplexing modules;
dividing the uplink wavelengths into N bands by the first-stage wavelength division multiplexing module, wherein the first-stage wavelength division multiplexing module multiplexes the uplink wavelengths within different bands from the corresponding first-stage branch optical fibers, wherein N and M are positive intergers greater than 1.

9. The method according to claim 6, wherein
the first-stage wavelength division multiplexing module comprises an arrayed waveguide grating device, an etched diffraction grating, a thin film filter device, or a fiber grating device; and
the second wavelength division multiplexing modules comprise arrayed waveguide grating devices, etched diffraction gratings, thin film filter devices, or fiber grating devices.

10. The method according to any one of claims 6 to 9, wherein
a device of the periodic wavelength division multiplexing module comprises a periodic arrayed waveguide grating device or a periodic etched diffraction grating device.

11. The method according to claim 7 or 8, before distributing the M×N downlink wavelengths of the trunk optical fiber to the N downlink channels by the first-stage wavelength division multiplexing module, the method further comprises:
distributing optical signals of downlink non-wavelength division multiplexed wavelengths and optical signals of downlink wavelength division multiplexed wavelengths respectively to a splitter-type optical distribution network, ODN and a wavelength-routed optical distribution network,ODN through a wavelength division multiplexing, WDM device.

12. The method according to claim 7 or 8, wherein before transmitting the uplink wavelengths within the different bands from the first-stage branch optical fibers to the trunk optical fiber of the optical distribution network by the first-stage wavelength division multiplexing module, the method further comprises:
multiplexing optical signals of uplink non-wavelength division multiplexed wavelengths and optical signals of uplink wavelength division multiplexed wavelengths by a wavelength division multiplexing, WDM device.

13. The method according to claim 7 or 8, wherein before distributing the multiple downlink wavelengths of the first-stage branch optical fibers to the downlink channels by the second-stage wavelength division multiplexing modules, the method further comprises:
distributing optical signals of downlink non-wavelength division multiplexed wavelengths and optical signals of downlink wavelength division multiplexed wavelengths respectively to a splitter-type optical distribution network, ODN and a wavelength-routed optical distribution network, ODN through a wavelength division multiplexing, WDM device.

14. The method according to claim 7 or 8, wherein before multiplexing uplink wavelengths within the different bands from the second-stage branch optical fibers to the first-stage branch fibers of the optical distribution network by the second-stage wavelength division multiplexing modules, the method further comprises:
multiplexing optical signals of uplink non-wavelength division multiplexed wavelengths and optical signals of uplink wavelength division multiplexed wavelengths by a wavelength division multiplexing, WDM device.

15. A computer-readable storage medium in which computer-executable instructions are stored, wherein the computer-executable instructions are used to perform the optical network distribution method according to any one of claims 6 to 14.
